# EUROPEAN PATENT SPECIFICATION

(11) **EP 3 188 624 B1**
(45) Date of publication and mention of the grant of the patent: **11.12.2019**
(21) Application number: 15837642.6
(22) Date of filing: 28.08.2015
(51) Int. Cl.: A47J 27/16, F24C 15/32

(54) **STEAM INJECTION SYSTEM AND METHOD**
DAMPFINJEKTIONSSYSTEM UND VERFAHREN
SYSTEME ET PROCÉDÉ D'INJECTION DE VAPEUR

(30) Priority: 02.09.2014 US 201462044714 P; 18.06.2015 US 201514743907
(43) Date of publication of application: 12.07.2017
(73) Proprietor: B/E Aerospace, Inc., Wellington, FL 33414 (US)
(72) Inventor: VAN DER LINDEN, Jeroen, 2803 BS Gouda (NL)
(74) Representative: Marles, Alan David
(86) International application number: PCT/US2015/047398
(87) International publication number: WO 2016/036594

(56) References cited:
- EP-A1- 1 717 518
- EP-A1- 1 724 530
- EP-A1- 1 953 458
- WO-A1-02/068876
- US-A- 4 173 215
- US-A- 5 631 033
- US-A1- 2002 001 537
- US-A1- 2003 178 411
- US-A1- 2005 145 622
- US-A1- 2007 062 927
- US-A1- 2009 272 728
- US-A1- 2012 017 770
- US-A1- 2012 199 110

## Description

### BACKGROUND

Disclosed herein is an oven steam injection system for heating food in an oven cavity, and particularly, a vehicle oven that directly injects steam into the oven cavity.

Prior ovens for use in vehicles, such as aircraft, typically have several elements disposed within the oven cavity and generate steam within the cavity. Such ovens typically include a heating element, a ventilator, and a baffle plate to control an induced air flow inside the oven cavity. These additional elements in the oven cavity result in long heating times and typically require a high cavity temperature, which also results in a high external oven temperature.

EP 1953458 discloses a method for cleaning a cooking appliance of the type having a cooking chamber into which steam is supplied via an external steam generator. The base of the chamber has a fluid discharge leading to a reservoir.

### SUMMARY

Various embodiments and related details of a novel vehicle oven are discussed below.

According to the present invention there is provided an oven steam injection system as set out in the attached claims and a method of injecting steam into an oven as set out in the attached claims.

While the exemplary embodiments described herein are presented in the context of an oven for an aircraft galley, these embodiments are exemplary only and are not to be considered limiting. The embodiments of the apparatus are not limited to ovens for use in an aircraft galley. For example, embodiments of the apparatus may be adapted for other food storage and cooking devices. Various embodiments may thus be used in any vehicle, including aircraft, spacecraft, ships, buses, trains, recreational vehicles, trucks, automobiles, and the like. Embodiments of the apparatus may also be used in homes, offices, hotels, factories, warehouses, garages, and other buildings where it may be desirable to heat food with steam. In general, the embodiments may be used in any location or application in which heating food with steam is desired.

### BRIEF DESCRIPTION OF THE DRAWINGS

Various embodiments are illustrated in the drawings and following discussion:
- FIG. 1A: is a pictorial front view of an oven in an oven steam injection system according to an embodiment, shown with an open door;
- FIG. 1B: is a pictorial front view of an oven in an oven steam injection system according to another embodiment utilizing a fan and baffles, shown with an open door;
- FIG. 2A: is a schematic view of an oven steam injection system that uses heating elements below the oven cavity, according to an embodiment;
- FIG. 2B: is a schematic view of an oven steam injection system, according to another embodiment;
- FIG. 2C: is a schematic view of an oven steam injection system that uses a fan and baffles, according to another embodiment;
- FIG. 2D: is a schematic view of an oven steam injection system that uses heating elements below the oven cavity, not in accordance with the present invention;
- FIG. 2E: is a schematic view of an oven steam injection system that uses heating elements below the oven cavity, not in accordance with the present invention;
- FIG. 3: is a top view of an arrangement of heating elements on the bottom of the oven cavity;
- FIG. 4: is a flowchart of a method of controlling an oven steam injection system, according to an embodiment; and
- FIG. 5: is a flowchart of a method of controlling the amount of water in an oven steam injection system, according to an embodiment.

### DETAILED DESCRIPTION

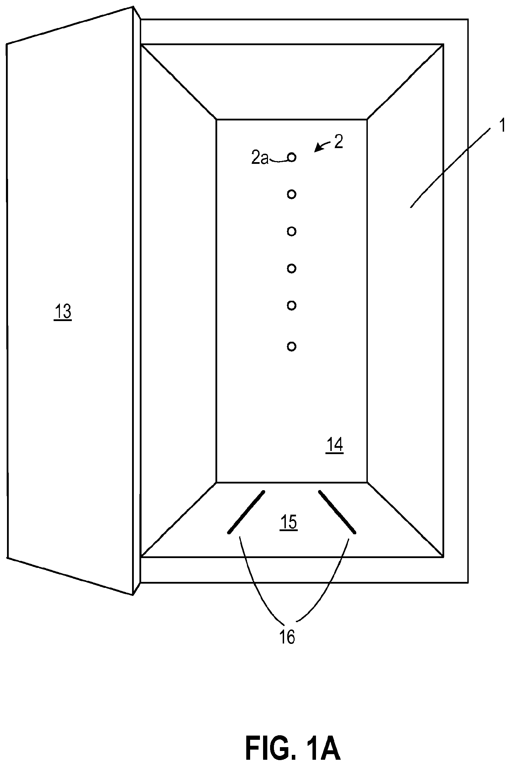

FIG. 1A is a front view of an oven with a door 13 in an open position to show an oven cavity 1. The oven cavity 1 defines a confined space where meals are heated prior to consumption. Steam that is generated outside of the oven cavity 1 is directly injected into the oven cavity 1 via one or more holes 2a of a steam injector 2 provided along a back wall 14 to heat the food provided therein.

There may be a single hole 2a or a plurality of holes 2a. Although FIG. 1A shows a plurality of holes 2a in a line, the holes could be arranged in a two-dimensional grid of any shape. The size, shape, and number of holes can be varied without departing from the spirit and scope of the invention.

Oven cavity 1 is provided with raisers 16 on a bottom 15 of the oven cavity 1 to aid in the draining of condensed water from oven cavity 1. The raisers 16 provide a place upon which oven contents, such as a tray, can rest and not be in contact with the floor 15 or water that accumulates in the floor 15.

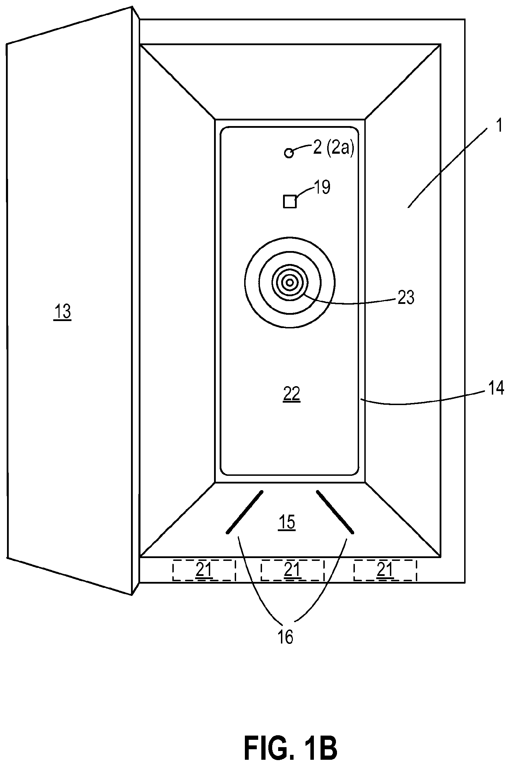

FIG. 1B is a front view of another embodiment having various other features. Instead of a plurality of holes 2a, as is illustrated in FIG. 1A, a single hole 2a forms the mechanism by which steam is provided to the cavity 1. To distribute the steam evenly, a fan 23 is located behind baffles 22 that spread the steam out. Additional heaters 21, which may be made of a positive temperature coefficient (PTC) material, or comprise conventional resistor-type heating mechanisms, may be located outside of the oven and attached to the bottom 15. FIG. 1B also illustrates a temperature sensor 19 that can be used to provide information back to a controller (described below). Any of the embodiments discussed herein may include such a temperature sensor 19.

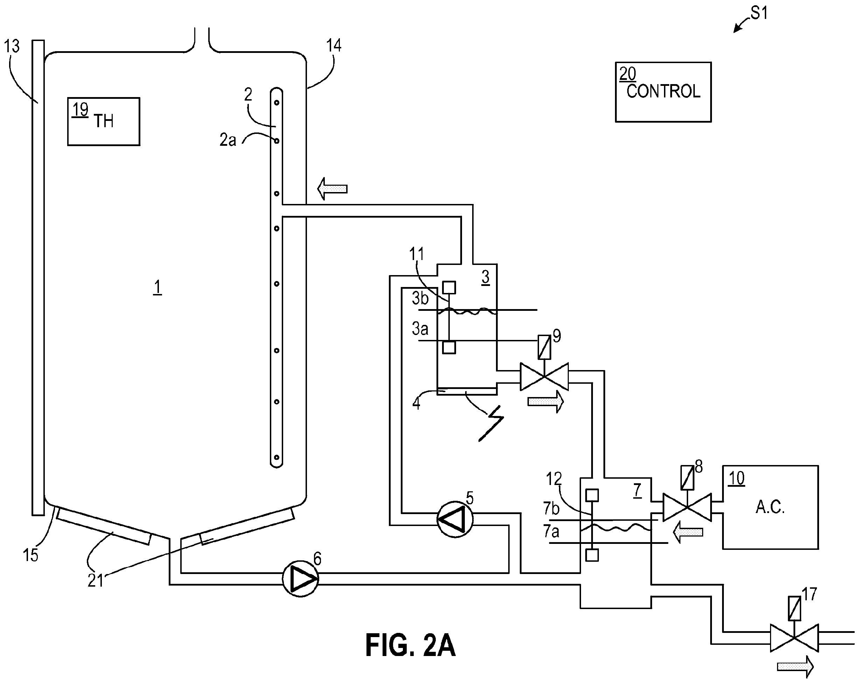

FIG. 2A is a schematic of an embodiment of an oven steam injection system S1. Steam is generated in a steam generator 3 having a heater reservoir. Steam generated in the steam generator 3 is directly injected into the oven cavity 1 through the steam injector 2, which is communicatively coupled to the steam generator 3. The steam generator 3 is located outside the oven cavity 1 and is dedicated to the preparation of steam. A heater element 4 contacts a bottom surface of the steam generator 3 and is operable to heat the steam generator 3 to convert the water in the heater reservoir of steam generator 3 into steam.

Steam from the steam generator 3 is injected into the oven cavity 1, thereby heating the food in the oven cavity 1. As heat is transferred to the food from the steam, the steam condenses into water, which is then collected at a bottom 15 of the oven cavity 1, which may be recycled for subsequent use. A cavity drain pump 6 is provided to pump the water collected at the bottom 15 to a drain reservoir 7. The system S1 is further provided with a generator supply pump 5, which is operable to pump water from the drain reservoir 7 to the heater reservoir in steam generator 3. Thus, the water condensed in oven cavity 1 is again generated into steam in the steam generator 3 and injected into the oven cavity 1 through steam injector 2.

Drain reservoir 7 is provided with a drain reservoir level sensor 12 for detecting a level of water in the drain reservoir 7. When the level of water in the drain reservoir 7, as detected by the drain reservoir level sensor 12, is below a predetermined low level drain threshold 7a, an oven water supply valve 8 is opened to supply water to the drain reservoir 7 from a main water supply 10. The main water supply 10 could, for example, be an aircraft main water supply. Once the level of water in the drain reservoir 7 detected by the drain reservoir level sensor 12 is greater than the low level drain threshold 7a (possibly by adding some amount for hysteresis to limit the frequency with which the oven water supply valve 8 is opened/closed), the oven water supply valve 8 is closed to stop the supply of water to the drain reservoir 7 from the main water supply 10.

The heater reservoir of the steam generator 3 is provided with a generator level sensor 11 for detecting a level of water in the heater reservoir of the steam generator 3. When the level of water in the steam generator 3, as detected by the generator level sensor 11, is below a predetermined low level heater threshold 3a, the generator supply pump 5 is operated to pump water from the drain reservoir 7 to the steam generator 3. Once the level of water in the steam generator 3 detected by the generator level sensor 11 exceeds the low level heater threshold 3a (possibly by adding some amount for hysteresis to limit the frequency with which the generator supply pump 5 is activated/deactivated), the generator supply pump 5 is stopped to stop the flow of water from the drain reservoir 7 to the steam generator 3.

When the level of water in the steam generator 3, as detected by the generator level sensor 11, is above a predetermined high level heater threshold 3b, a generator drain valve 9 operatively coupled to the steam generator 3 is opened to drain water from the steam generator 3 to the drain reservoir 7. Once the level of water in the steam generator 3 detected by the generator level sensor 11 is below the high level heater threshold 3b (possibly by adding some amount for hysteresis to limit the frequency with which the generator drain valve 9 is opened/closed), the generator drain valve 9 is closed to stop the draining of water from the steam generator 3.

When the level of water in the drain reservoir 7 is above a high level drain threshold 7b and the level of water in the steam generator 3 is not above the high level heater threshold 3b, the generator supply pump 5 is operated to pump water to the heater reservoir of steam generator 3. In an optional embodiment, if the level of water in the drain reservoir 7 is above a high level drain threshold 7b and the level of water in the steam generator 3 is also above the high level heater threshold 3b (i.e., both reservoirs exceed respective high level thresholds), an optional reserve drain valve 17 is opened to allow water to go to the aircraft drain. Once the level of water in the drain reservoir 7 is below its high level drain threshold 7b, the generator supply pump 5 can be stopped and the reserve drain valve 17 closed. The optional reserve drain valve 17 can also be present in any of the embodiments described herein. Any other mechanism for removing excess water may also be provided.

The various functions described herein may be controlled by a controller 20, which may be connected to any or all of the controllable and sensing elements described herein, including heater element 4, supply pump 5, cavity drain pump 6, water supply valve 8, generator drain valve 9, level sensors 11, 12, and drain valve 17.

In an embodiment, heaters 21 can be added to a side, such as the bottom 15, of the oven cavity 1. These heaters can take on any form, but, in an embodiment, can be positive temperature coefficient (PTC) heaters that are self-controlled and do not need an extra control system to avoid overheating. This is because the natural resistance of the material used for the heaters will not allow the heaters to exceed some predetermined temperature. This heater 21 can be present in any of the embodiments disclosed herein. As discussed above, a hysteresis curve could be used for any of the high level and low-level values to more efficiently control the process.

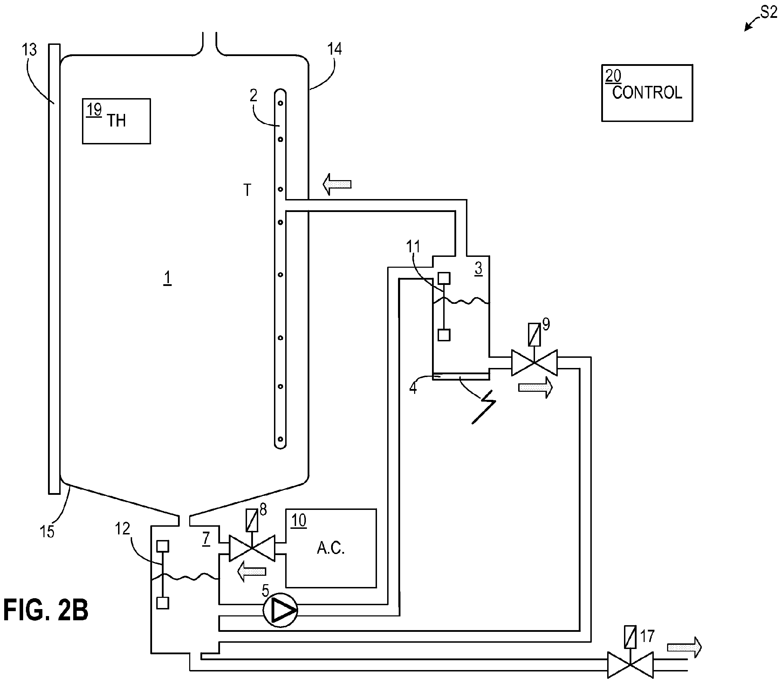

FIG. 2B is a schematic of another embodiment of an oven steam injection system S2. According to the embodiment shown in FIG. 2B, the drain reservoir 7 is disposed below the oven cavity 1. The oven cavity 1 can be extended to serve as a drain reservoir 7 (e.g., gravity fed), similar to a wet sump. Steam injected into the oven cavity 1 condenses and is fed into the drain reservoir 7 by gravity from the bottom 15 of the oven cavity 1. Condensed water from the drain reservoir 7 can then be pumped to the steam generator 3 by the generator supply pump 5. Accordingly, the system S2 in FIG. 2B does not require the cavity drain pump 6 of the system S1 shown in FIG. 2A, although this design is more susceptible to issues related to aircraft orientations that differ from horizontal, which the FIG. 2A embodiment deals with more robustly. Alternatively, any mix of system components from system S1 and system S2 is also possible.

The injection of externally created steam into the oven cavity 1, according to embodiments, induces a large acceleration of air and steam inside the cavity, which provides the large condensation heat flux necessary for the rapid temperature rise of the meals being heated in the oven cavity 1. The usage of externally supplied steam also provides for a more uniform heating of the food within the oven cavity 1. More heat energy can be provided to the steam when it is externally created, since there are not the same size limitations for a heating unit to heat the steam external to the cavity (and additionally, more of the space in the oven cavity is available for food). Saturated steam injected into the oven cavity 1 condenses on the coldest spots, thereby automatically reducing temperature differences. Thus, the temperature difference between meals heated in the oven cavity 1 is significantly reduced due to the nature of the heating process. Further, for reasons of food safety, a minimum meal temperature is demanded when heated for consumption. When temperature differences among the meals being heated are large, more energy is required to meet this minimum meal temperature requirement because many meals will be heated to a higher temperature. A reduced temperature difference among meals in the oven cavity, as achieved by embodiments, will therefore save heating energy by reducing the temperature the oven needs to reach to sufficiently heat each of the meals, and prevent the meals from being overcooked.

In addition, through the use of steam, the maximum internal temperature of the oven cavity 1 can be reduced to, for example, just slightly above the condensation temperature of saturated steam, since internal heating elements going significantly above this temperature to create the steam are not present. This reduces the outside temperature of the housing or casing of the oven, thereby improving the safety of the oven to users. Additionally, because the internal temperature of the oven cavity 1 is reduced relative to prior ovens, less insulation material can be applied. This results in weight savings that are particularly important in aircraft oven systems and reduction in the cost of the oven system.

According to various embodiments, several structures that are generally found inside prior ovens are excluded from the oven cavity 1. For example, the oven cavity 1 does not need to include a ventilator, a heating element, and a baffle plate that controls the induced air flow, among others. Similarly, because steam is directly injected into the oven cavity 1, structures that were previously necessary to generate steam within an oven cavity, such as a fan, are not necessary. In prior ovens, these structures act as a parasitic thermal mass in the system that would need to be heated along with the food in the oven due to their presence within the oven cavity. Because oven steam injection systems, according to various embodiments, eliminate the need for several structures internal to the oven cavity 1, the oven can have a faster response and heating relative to prior ovens, thereby improving heating efficiency and energy savings.

According to the invention, the water used to generate steam can be recycled, thereby providing additional weight savings. Prior systems that rely entirely upon a main water supply, such as an aircraft water reserve, without recycling the condensed water in the oven cavity use more of the water reserve than necessary. By recycling the condensed water in the oven cavity, the use of the main water supply can be reduced, thereby saving weight by reducing the water reserve that is required.

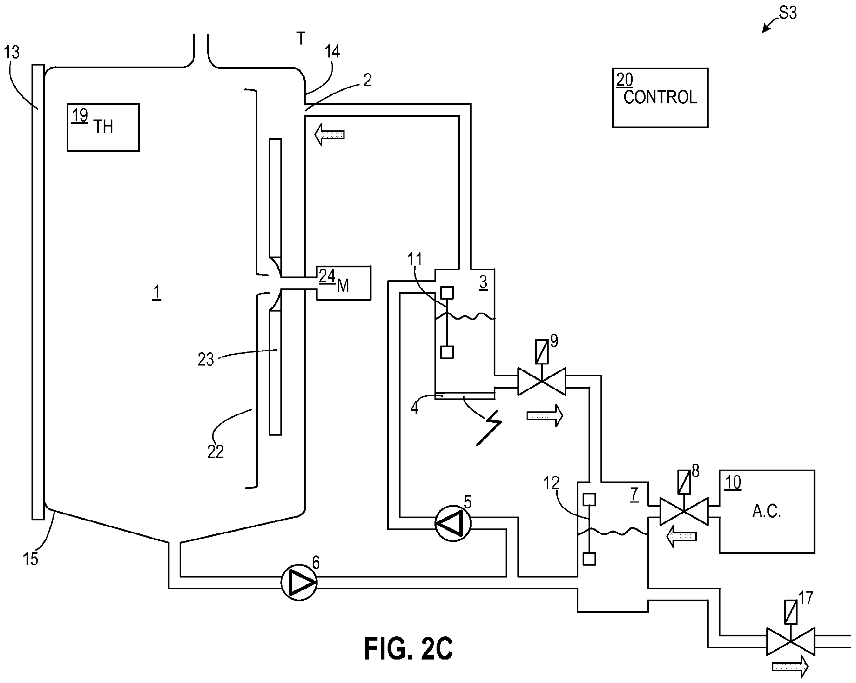

Although the above considers systems in which there is no fan or baffle, there may be times when these features are desirable. FIG. 2C illustrates such an embodiment that is similar to the embodiment shown in FIG. 2A, but that includes a baffle 22 and fan 23 with a fan motor 24. In this embodiment, the steam injector 2 introduces the steam to the oven cavity 1 at a single point. In order, in this embodiment, to more effectively distribute the steam throughout the cavity 1, the fan blades 23 rotate to move the steam from its introduction point 2 throughout the cavity 1. The baffle plate 22 allows the fan 23 to more effectively move the steam to more distant parts of the cavity 1. Thus, a tradeoff is made between the complexity of the steam introduction to the cavity 1 and the inclusion of the baffle 22, fan 23, and its motor 24.

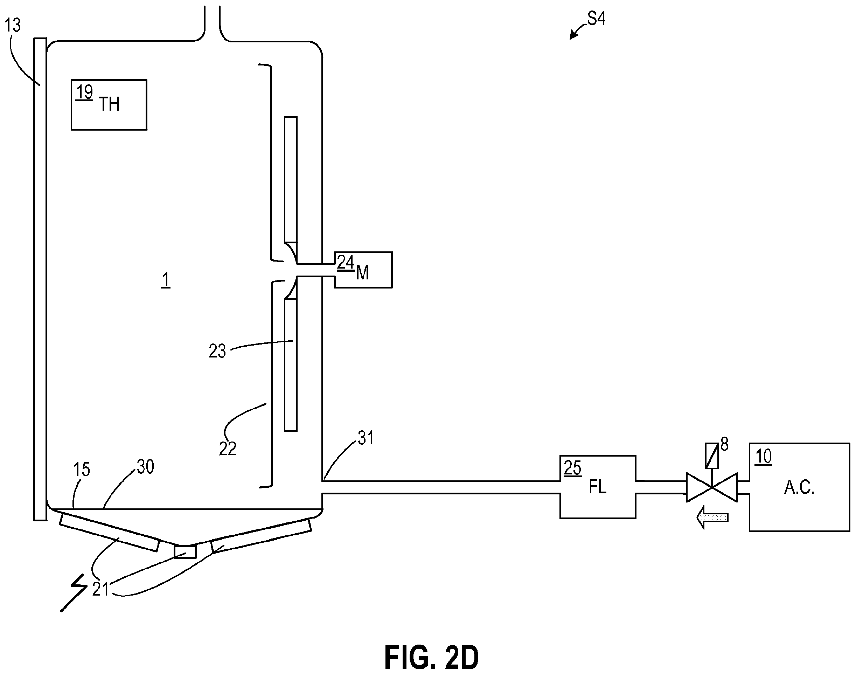

FIG. 2D is a schematic diagram illustrating a system not according to the invention . This system includes the baffle 22, fan 23, and motor of the prior embodiment, but introduces the water 30 directly into the bottom 15 of the cavity 1 at a water input 31. The bottom has heater elements 21, such as the PTC elements 21 described above, affixed directly to a side of the cavity 1 to have good thermal contact. Water is introduced via the main water supply 10 with the oven water supply valve 8, and utilizes a flow meter 25 to correctly introduce the proper amount of water into the cavity 1, where the bottom portion of the cavity serves as a water reservoir (wet sump). Water exits the cavity 1 through evaporation, although other draining mechanisms, as described above, can be provided. The evaporated water can still, in this design, be condensed and further used. Stated differently, the heaters 21 can be used in any of the above-stated designs. These heaters 21 can be used both to generate steam in the cavity 1 as well as to dry out the cavity 1 without running into an overheat situation. Two alternatives are provided: in the first, water is gradually fed to the reservoir inside the cavity in which the steam is generated. In the second, all water required for the process is initially supplied (in an embodiment, this might be, e.g., 700 cc).

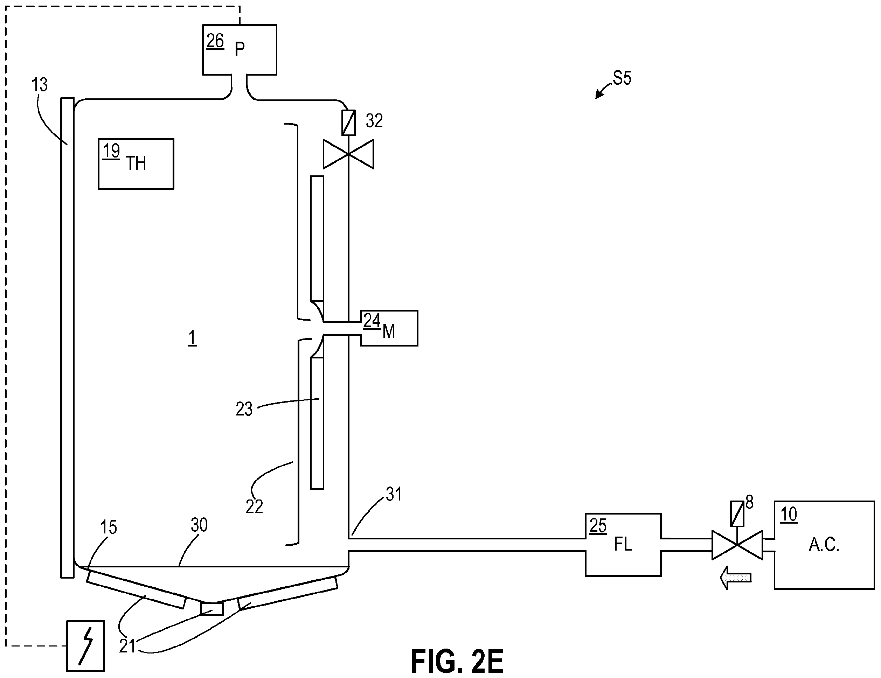

FIG. 2E provides a system (not according to the invention)that reduces water consumption and avoids excessive water vapor from being ejected into the galley and avoids condensation on cold spots. In this embodiment, a pressure sensor 26 monitors the cavity pressure, and the controller 20 is used to hold the pressure at very small over pressure to the air craft cabin pressure. The over pressure would typically be no more than 20 mbar. The oven starts with an air valve 32 open. At first, total air pressure builds up due to the rise of the partial pressure of the injected water vapor (steam). This mix of air and water vapor is vented through the valve 32 air opening. Once the temperature sensor 19 indicates a temperature that corresponds with the saturated vapor pressure at cabin pressure (typically 94° C) the air valve 32 is closed.

From this point on, the cavity is closed and over pressure is maintained by regulating the heating power. Typically, approximately 200 cc of water is accumulated on the meal carrier and the meals (however, this varies with each type of oven and contents). The cavity walls and floor may accumulate 100 cc of water, and, at cabin pressure the amount of water vapor that is in the cavity volume is approximately 30 g. In total, roughly 350 cc of water is evaporated and accumulated in the oven. Advantageously, the cavity over-pressure controlled power control can anticipate cabin pressure variations and the control system is not dependent on ambient pressure of the oven. Cavity over-pressure controlled power has the potential to save water. Alternatively, the cavity temperature could be monitored and used to control the heating power.

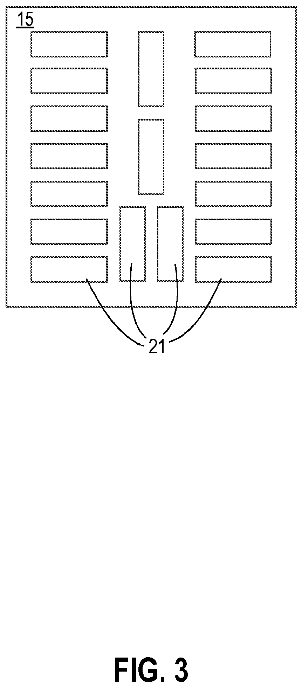

FIG. 3 is an example layout of the bottom 15 to which bottom heaters 21 have been affixed.

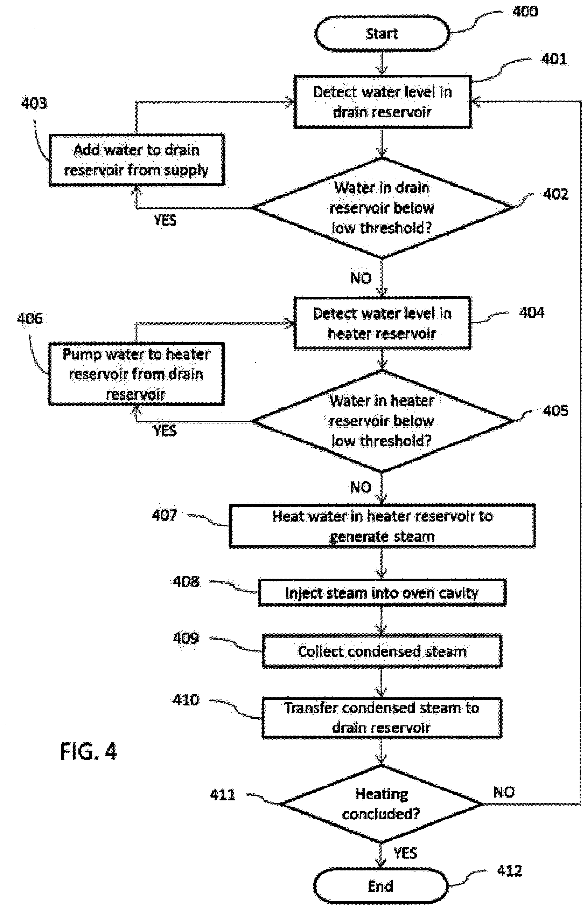

FIG. 4 is a flowchart illustrating a process of controlling an oven steam injection system, according to an embodiment. The process of controlling the system can be implemented by the controller 20 having a processor communicatively coupled with a memory. The process begins at step 400 where a user initiates the desired heating of food within oven cavity 1. For example, the heating process may be based on a predetermined amount of heating time or based on reaching a desired food temperature. At step 401, the water level in drain reservoir 7 is detected by drain reservoir level sensor 12 and compared with a predetermined low level threshold 7a at step 402. If the level of water in the drain reservoir 7 is below the low level threshold 7a, the process proceeds to step 403. At step 403, water is added to the drain reservoir 7 from the main water supply 10, and the level of water is detected again.

If the level of water in drain reservoir 7 is not below the low level threshold 7a at step 402, the process proceeds to step 404 where the level of water in the heater reservoir of steam generator 3 is detected by the generator level sensor 11. If the level of water in the heater reservoir 3c is below a low level threshold 3a, the process proceeds to step 406 where water is pumped to the heater reservoir 3cfrom drain reservoir 7 by operating generator supply pump 5. The process then returns to steps 404 and 405 where the level of water in the heater reservoir 3c is detected and compared to the low threshold 3a.

If the level of water in the heater reservoir 3c is not below the low threshold 3a at step 405, the process proceeds to step 407. At step 407, the water in the heater reservoir 3c is heated by the heating element 4 to generate steam within the steam generator 3. At step 408, the steam generated in steam generator 3 is injected into the oven cavity 1 through the steam injector 2. As the steam condenses within the oven cavity 1, water is collected at the bottom 15 of the oven cavity at step 409. The condensed water is then transferred to drain reservoir 7 at step 410. In the embodiment depicted in FIG. 2A, the cavity drain pump 6 pumps the collected water to the drain reservoir 7. In the embodiment depicted in FIG. 2B, water is collected in drain reservoir 7 by the force of gravity on the condensed water.

At step 411, the system determines whether heating has concluded. For example, if the heating process is based on a predetermined heating time, a timer may be included for tracking the time of the process. Once the elapsed time tracked by the timer reaches the predetermined heating time, the process terminates at step 412. If the elapsed time has not yet reached the predetermined heating time, the process proceeds to step 401 where the process is repeated. Alternatively, for example, the heating process may be based upon reaching a desired food temperature. A temperature sensor 19 for detecting the food temperature within the oven cavity 1, and transmitting the food temperature to a controller in the system, may be provided. This temperature sensor can either monitor air temperature within the oven cavity 1, or can measure the temperature of the food directly, such as via a probe or via an infra-red sensor reading.

When the food temperature detected by the temperature sensor reaches the predetermined desired food temperature, the process terminates at step 412. If the food temperature has not yet reached the desired food temperature, the process proceeds to step 401 where the process is repeated. The processor may determine a proper amount of steam to send to the food based on a measured temperature and knowledge of a desired temperature, and may also use a time history of the warming temperature to adapt to the thermal mass being heated. Based on these determinations, it can determine how much steam to deliver to ensure a correct temperature is reached. When the condensing pressure has reached cabin pressure, the power should be controlled in order to avoid excess evaporation that will only escape into the cabin.

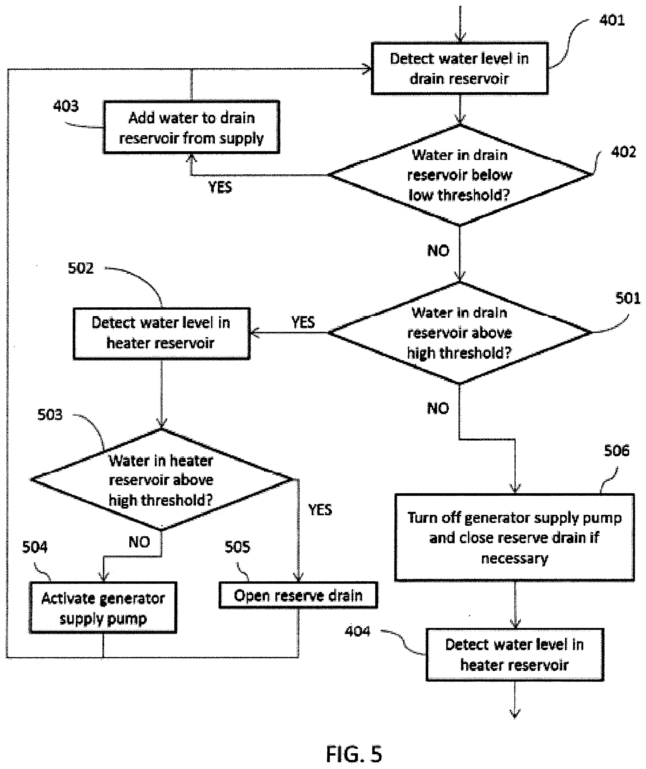

FIG. 5 is a flowchart illustrating a process for controlling the water in an oven steam injection system, according to an embodiment. In particular, FIG. 5 depicts steps that may occur between steps 401 and 404 shown in FIG. 4. When the level of water in the drain reservoir 7 detected by the drain reservoir level sensor 12 exceeds the low level drain threshold 7a (NO at step 402), in an optional procedure, the level of water in the drain reservoir 7 is compared with a high level drain threshold 7b at step 501. If the level of water in the drain reservoir 7 is determined to exceed the high level drain threshold (YES at step 501), the level of water in the heater reservoir is 3c detected at step 502 and compared with a high level heater threshold 3b at step 503.

If the level of water in the heater reservoir exceeds the high level heater threshold 3b (YES at step 503), i.e., the levels of water in both reservoirs 3c, 7 exceed respective high level thresholds 3b, 7b, the reserve drain 17 is opened at step 505 to allow water to return to the main water supply 10 from the drain reservoir 7. The process then returns to step 401. If the level in heater reservoir 3c does not exceed the high level heater threshold 3b (NO at step 503), the generator supply pump 5 is operated to pump water from the drain reservoir 7 to the heater reservoir 3c at step 504. The process then returns to step 401. Once the level of water in the drain reservoir 7 is below its high level threshold 7b (NO at step 501), the generator supply pump 5 can be stopped and the reserve drain valve 17 closed, if necessary, at step 506. The process then continues with step 404 and subsequent steps as described above.

### TABLE OF REFERENCE CHARACTERS

- S1-S5: system embodiments
- 1: oven cavity
- 2: steam injector
- 2a: steam injector hole
- 3: steam generator
- 3a: low level heater threshold
- 3b: high level heater threshold
- 3c: heater reservoir
- 4: heater element
- 5: generator supply pump
- 6: cavity drain pump
- 7: drain reservoir
- 7a: drain reservoir low level threshold
- 7b: drain reservoir high level threshold
- 8: oven water supply valve
- 9: generator drain valve
- 10: main water supply
- 11: generator level sensor
- 12: reservoir level sensor
- 14: rear wall
- 15: bottom
- 16: raisers
- 17: drain valve
- 19: temperature sensor
- 21: bottom heaters, PTC heater
- 22: baffle plate
- 23: fan
- 24: motor
- 25: flow meter
- 26: pressure sensor
- 30: water
- 31: water input
- 32: air valve
- 400- 505: method steps

## Claims

1. An oven steam injection system comprising:
an oven comprising:
a compartment (1) enclosed on all sides;
a door (13) on a front side of the compartment (1), the door (13) operable to open the compartment (1); and
a steam injector (2) disposed inside the compartment (1);
a steam generator (3) external to the compartment (1), comprising:
a heater reservoir; and
a heating element (4) operable to heat water within the heater reservoir to generate steam,
the steam generator (3) operable to inject steam into the compartment (1) through the steam injector (2);
a drain reservoir (7) disposed below the compartment (1), the drain reservoir (7) operable to collect water by gravity from steam that has condensed in the compartment (1);
a generator supply pump (5); and
a generator level sensor (11) for detecting a level of water in the heater reservoir,
wherein the generator supply pump (5) is operable to pump water from the drain reservoir (7) to the heater reservoir when the level of water in the heater reservoir as detected by the generator level sensor (11) is below a predetermined low heater reservoir threshold;
**characterised in that** the oven steam injection system further comprises:
a water supply (10) operatively connected to the drain reservoir (7); and
a drain reservoir level sensor (12) for detecting a level of water in the drain reservoir (7),
wherein the water supply (10) provides water to the drain reservoir (7) when the level of water in the drain reservoir (7) as detected by the drain reservoir level sensor (12) is below a predetermined low drain reservoir threshold.

2. The oven steam injection system of claim 1, further comprising:
compartment heating elements (21) that are located on a side of the compartment (1).

3. The oven steam injection system of claim 2, wherein the compartment heating elements (21) are PTC elements.

4. The oven steam injection system of claim 1, further comprising:
a fan (23);
a motor (24) that drives the fan (23); and
a baffle plate (22) located in front of the fan (23);
wherein the fan (23), motor (24), and baffle plate (22) are configured to evenly distribute the injected steam throughout the compartment (1).

5. The oven steam injection system of claim 4, wherein the steam injector injects (2) steam at a single point within the compartment (1).

6. A method of injecting steam into an oven, the method comprising:
providing water in a heater reservoir that is disposed outside of a compartment (1) of the oven;
heating the water in the heater reservoir by a heating element (4) to generate steam;
injecting steam from the heater reservoir into the compartment (1) through a steam injector (2) disposed in the compartment (1);
collecting water in a drain reservoir (7) disposed below the compartment (1), the water being collected in the drain reservoir (7) by gravity from steam that has condensed in the compartment (1);
detecting a level of water in the heater reservoir; and
pumping water from the drain reservoir (7) to the heater reservoir by a generator supply pump (5) when the level of water in the heater reservoir is below a predetermined low heater reservoir threshold;
**characterised in that** the method further comprises:
detecting a level of water in the drain reservoir (7); and
supplying water to the drain reservoir by a water supply (10) when the level of water in the drain reservoir (7) is below a predetermined low drain reservoir threshold.

## Patentansprüche

1. Dampfinjektionssystem für einen Ofen, umfassend:
einen Ofen, umfassend:
eine auf allen Seiten abgeschlossene Kammer (1);
eine Tür (13) auf einer Vorderseite der Kammer (1), wobei die Tür (13) zum Öffnen der Kammer (1) funktionsfähig ist; und
einen Dampfinjektor (2), der im Innern der Kammer (1) angeordnet ist;
einen Dampfgenerator (3) außerhalb der Kammer (1), umfassend:
einen Heizbehälter; und
ein Heizelement (4), das zum Erhitzen von Wasser im Innern des Heizbehälters zum Erzeugen von Dampf funktionsfähig ist,
wobei der Dampfgenerator (3) zum Injizieren von Dampf in die Kammer (1) mithilfe des Dampfinjektors (2) funktionsfähig ist;
einen Ablaufbehälter (7), der unterhalb der Kammer (1) angeordnet ist, wobei der Ablaufbehälter (7) zum Sammeln von Wasser aus in der Kammer (1) kondensiertem Dampf mittels Schwerkraft funktionsfähig ist;
eine Generatorversorgungspumpe (5); und
einen Generatorwasserstandssensor (11) zum Ermitteln eines Wasserstands in dem Heizbehälter,
wobei die Generatorversorgungspumpe (5) zum Pumpen von Wasser aus dem Ablaufbehälter (7) in den Heizbehälter funktionsfähig ist, wenn der Wasserstand in dem Heizbehälter, wie von dem Generatorwasserstandssensor (11) erkannt, unterhalb eines vorgegebenen niedrigen Schwellenwerts für den Heizbehälter liegt;
**dadurch gekennzeichnet, dass** das Dampfinjektionssystem für einen Ofen ferner umfasst:
eine Wasserversorgung (10), die funktionsfähig mit dem Ablaufbehälter (7) verbunden ist; und einen Ablaufbehälter-Wasserstandssensor (12) zum Erkennen eines Wasserstands in dem Ablaufbehälter (7),
wobei die Wasserversorgung (10) Wasser an den Ablaufbehälter (7) liefert, wenn der Wasserstand in dem Ablaufbehälter (7), wie von dem Ablaufbehälter-Wasserstandssensor (12) erkannt, unterhalb eines vorgegebenen niedrigen Schwellenwerts für den Ablaufbehälter liegt.

2. Dampfinjektionssystem für einen Ofen nach Anspruch 1, ferner umfassend: Kammerheizelemente (21), die auf einer Seite der Kammer (1) gelegen sind.

3. Dampfinjektionssystem für einen Ofen nach Anspruch 2, wobei die Kammerheizelemente (21) PTC-Elemente sind.

4. Dampfinjektionssystem für einen Ofen nach Anspruch 1, ferner umfassend:
einen Lüfter (23);
einen Motor (24), der den Lüfter (23) antreibt; und
eine Prallplatte (22), die vor dem Lüfter (23) gelegen ist;
wobei der Lüfter (23), der Motor (24) und die Prallplatte (22) zum gleichmäßigen Verteilen des injizierten Dampfes in der gesamten Kammer (1) ausgelegt sind.

5. Dampfinjektionssystem für einen Ofen nach Anspruch 4, wobei der Dampfinjektor (2) an einem einzigen Punkt innerhalb der Kammer (1) Dampf injiziert.

6. Verfahren zur Injektion von Dampf in einen Ofen, wobei das Verfahren umfasst:
Bereitstellen von Wasser in einem Heizbehälter, der außerhalb einer Kammer (1) des Ofens gelegen ist;
Heizen des Wassers in dem Heizbehälter durch ein Heizelement (4) zum Erzeugen von Dampf;
Injizieren von Dampf aus dem Heizbehälter in die Kammer (1) mithilfe eines Dampfinjektors (2), der in der Kammer (1) gelegen ist;
Sammeln von Wasser in einem Ablaufbehälter (7), der unterhalb der Kammer (1) gelegen ist, wobei das Wasser aus in der Kammer (1) kondensiertem Dampf mittels Schwerkraft in dem Ablaufbehälter (7) gesammelt wird;
Erkennen eines Wasserstands in dem Heizbehälter; und
Pumpen von Wasser aus dem Ablaufbehälter (7) in den Heizbehälter durch eine Generatorversorgungspumpe (5), wenn der Wasserstand in dem Heizbehälter unterhalb eines vorgegebenen niedrigen Schwellenwerts für den Heizbehälter liegt;
**dadurch gekennzeichnet, dass** das Verfahren ferner umfasst:
Erkennen eines Wasserstands in dem Ablaufbehälter (7); und
Zuführen von Wasser in den Ablaufbehälter durch eine Wasserversorgung (10), wenn der Wasserstand in dem Ablaufbehälter (7) unterhalb eines vorgegebenen niedrigen Schwellenwerts für den Ablaufbehälter liegt.

## Revendications

1. Système d'injection de vapeur de four comprenant :
un four comprenant :
un compartiment (1) fermé sur tous les côtés ;
une porte (13) sur un côté frontal du compartiment (1), la porte (13) pouvant fonctionner pour ouvrir le compartiment (1) ; et
un injecteur de vapeur (2) disposé à l'intérieur du compartiment (1) ;
un générateur de vapeur (3) externe au compartiment (1), comprenant :
un réservoir d'appareil de chauffage ; et
un élément de chauffage (4) pouvant fonctionner pour chauffer de l'eau dans le réservoir de l'appareil de chauffage pour produire de la vapeur,
le générateur de vapeur (3) pouvant fonctionner pour injecter de la vapeur dans le compartiment (1) par l'injecteur de vapeur (2) ;
un réservoir de drainage (7) disposé au-dessous du compartiment (1), le réservoir de drainage (7) pouvant fonctionner pour collecter l'eau par gravité de la vapeur qui s'est condensée dans le compartiment (1) ;
une pompe d'approvisionnement de générateur (5) ; et
un capteur de niveau de générateur (11) pour détecter un niveau d'eau dans le réservoir de l'appareil de chauffage,
dans lequel la pompe d'approvisionnement de générateur (5) peut fonctionner pour pomper l'eau du réservoir de drainage (7) au réservoir de l'appareil de chauffage quand le niveau d'eau dans le réservoir de l'appareil de chauffage tel que détecté par le capteur de niveau de générateur (11) est au-dessous d'un seuil de réservoir d'appareil de chauffage bas prédéterminé ;
**caractérisé en ce que** le système d'injection de vapeur de four comprend en outre :
un approvisionnement d'eau (10) connecté opérationnellement au réservoir de drainage (7) ; et
un capteur de niveau de réservoir de drainage (12) pour détecter un niveau d'eau dans le réservoir de drainage (7),
l'approvisionnement d'eau (10) fournissant de l'eau au réservoir de drainage (7) quand le niveau d'eau dans le réservoir de drainage (7) tel que détecté par le capteur de niveau de réservoir de drainage (12) est au-dessous d'un seuil de réservoir de drainage bas prédéterminé.

2. Système d'injection de vapeur de four selon la revendication 1, comprenant en outre :
des éléments de chauffage de compartiment (21) qui sont situés sur un côté du compartiment (1).

3. Système d'injection de vapeur de four selon la revendication 2, dans lequel les éléments de chauffage de compartiment (21) sont des éléments PTC.

4. Système d'injection de vapeur de four selon la revendication 1, comprenant en outre :
un ventilateur (23) ;
un moteur (24) qui dirige le ventilateur (23) ; et
une plaque de déflecteur (22) située en face du ventilateur (23) ;
le ventilateur (23), le moteur (24) et la plaque de déflecteur (22) étant configurés pour distribuer uniformément la vapeur injectée à travers le compartiment (1).

5. Système d'injection de vapeur de four selon la revendication 4, avec lequel l'injecteur de vapeur injecte (2) de la vapeur à un seul point dans le compartiment (1).

6. Procédé d'injection de vapeur dans un four, le procédé comprenant les étapes consistant à :
fournir de l'eau dans un réservoir d'appareil de chauffage qui est disposé à l'extérieur d'un compartiment (1) du four ;
chauffer l'eau dans le réservoir de l'appareil de chauffage par un élément de chauffage (4) pour produire de la vapeur ;
injecter de la vapeur du réservoir de l'appareil de chauffage dans le compartiment (1) par un injecteur de vapeur (2) disposé dans le compartiment (1) ;
collecter l'eau dans un réservoir de drainage (7) disposé au-dessous du compartiment (1), l'eau étant collectée dans le réservoir de drainage (7) par gravité à partir de la vapeur qui s'est condensée dans le compartiment (1) ;
détecter un niveau d'eau dans le réservoir de l'appareil de chauffage ; et
pomper l'eau du réservoir de drainage (7) au réservoir de l'appareil de chauffage par une pompe d'approvisionnement de générateur (5) quand le niveau d'eau dans le réservoir d'appareil de chauffage est au-dessous d'un seuil de réservoir d'appareil de chauffage bas prédéterminé ;
**caractérisé en ce que** le procédé comprend en outre les étapes consistant à :
détecter un niveau d'eau dans le réservoir de drainage (7) ; et
approvisionner l'eau au réservoir de drainage par un approvisionnement d'eau (10) quand le niveau d'eau dans le réservoir de drainage (7) est au-dessous d'un seuil de réservoir de drainage bas prédéterminé.
